Europäisches Patentamt

European Patent Office

Office européen des brevets

(19)

(11) **EP 1 429 212 A1**

(12) ## EUROPEAN PATENT APPLICATION

(43) Date of publication:
**16.06.2004 Bulletin 2004/25**

(51) Int Cl.⁷: **G03H 1/02**, G07D 7/12, B42D 15/10

(21) Application number: **02027481.7**

(22) Date of filing: **10.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(71) Applicant: **SICPA HOLDING S.A.**
**1008 Prilly (CH)**

(72) Inventors:
• **Veya, Patrick**
**1110 Morges (CH)**

• **Müller, Edgar**
**1700 Fribourg (CH)**
• **Amrien, Olivier**
**1005 Lausanne (CH)**
• **Tiller, Thomas**
**1030 Bussigny (CH)**

(74) Representative: **Hepp, Dieter et al**
**Hepp, Wenger & Ryffel AG,**
**Friedtalweg 5**
**9500 Wil (CH)**

(54) **Article and document comprising a diffractive image structure**

(57) A directly embossed, substrate-inherent Diffractive Image Device, e.g. a hologram, an optokinematic element, a diffraction pattern or a micro-engraving, isdisclosed for the protection of bank notes, value papers, official documents, cards, tickets, labels or branded goods. The device is made by embossing a micro-engraving (G) into a metal coated (2) support (1), such as vacuum-aluminized paper, with the help of a corresponding embossing shim and applying the required pressure, and by protecting the embossed pattern on said support from environment influence and tampering by a varnish over-coating (3), and wherein the micro-engraving relief extends at least partially through the metal layer into the carrier support. The embossing process is compatible, and can be combined with copperplate-intaglio printing.

Fig. 1

EP 1 429 212 A1

## Description

### Field of invention

The invention relates to an article and a document comprising a diffractive image structure and a method of producing such article or document, particularly it relates to micro-engraved security articles, such as banknotes, value papers, official documents, cards, transportation tickets, branded goods and the like. In particular it concerns a holographic, or otherwise micro-engraved, security marking, a method of producing said marking, and the use of a metal coated paper to form a diffractive image structure.

### State of the art

Diffractive optically variable image devices (DOVIDs) are known in the art and used as anti-copy devices on value papers, official documents, credit cards, tickets and the like, as well as in the form of protection labels for branded goods (R.L. van Renesse, *'Iridescent Optically Variable Devices: A Survey'*, in *'Optical Document Security'*, 2nd ed. Artech House, Boston, 1998). DOVIDs are generally produced in the form of thermoplastic foils by mass-replication from a master embossing shim, as disclosed e.g. in US 3,758,649; US 4,728,377; and US 4,547,141.

A shortcoming of the prior art with respect to security applications is the need for carrying out said mass replication of the DOVID devices in a different process step and at a different production location than their application to the security documents. The security printer generally will need to sub-contract the manufacturing of the required DOVIDs to a commercial hologram manufacturer, which implies for him to give out of his hands the control of the embossing shims and to loose the accounting over the amount of effectively manufactured DOVID replicas.

Another shortcoming of the prior art arises from the disparate nature of the material of the DOVID foil and the substrate (mostly paper or cardboard) on which said foil is applied. A DOVID foil has the tendency of detaching from a paper substrate under the influence of moisture, detergents, heat and mechanical stress. This has noteworthy been the case with foils on currency, where counterfeiters had managed to remove the foil from its support by the mere action of laundry.

US 5,873,305 and US 5,862,750 propose a direct embossing of a DOVID inherent on paper, whereby said DOVID may be a hologram, an optokinematic element and other microengraved pattern which produces optical effects. However, as it rapidly appears to the ones skilled in the art, the method disclosed in the cited documents is hardly of any usefulness in practice because the resulting embossed device in paper i) has a bad visual appearance and ii) does not withstand moisture and mechanical stress. Protection of the so produced DOVID by a varnish over-coating would destroy the visual effect as shown below; and a metallization - the only means to obtain satisfactory visual appearance - would require to take the embossed documents out again of the security printing facility to a high-vacuum metallization plant.

No consistent solution has, therefore, been proposed in the prior art, which would allow a security printer to produce a DOVID in his own facility, under control of the embossing shims and without the need for the documents to be taken out for a further process step after the DOVID has been embossed.

### Summary of the invention

The object of the present invention is a security document or article, carrying a Diffractive Optically Variable Image Device (DOVID) which is inherent on said document or article and directly produced at the security printer's facility by a printing-like embossing process, following the method disclosed hereafter. Security document in the sense of this specification means any printable sheet or element, such as a bank note, a label, a packaging, a ticket, or any document secured against counterfeiting or durably marked for authentication purposes.

The DOVIDs produced according to the present invention have the advantage that they

- are inherent with the substrate (no tampering possible);
- have excellent visibility, thanks to metallization;
- are protected against environmental influence and mechanical replication, thanks to a protective over-coating.

The method of the present invention for producing DOVIDs has the advantage in that it

- respects the logic of printing operations (low number of supplementary production steps, easily integrateable in a security printer's facility);
- produces visually excellent, physically robust and long-lasting DOVIDs;
- keeps the control of the embossing shims and of their use with the security printer;
- avoids the need of taking the embossed documents out of the security printer's facility for a further processing (metallization) step.

According to the present invention, the DOVID is directly embossed into a surface-metallized paper or similar fibrous substrate, using a corresponding embossing shim in conjunction with a 'copperplate'-Intaglio type printing or embossing press, which is able to furnish the required embossing pressure. Said pressure must be significantly higher than the pressure applied in the known art of embossing DOVIDs into softened thermoplastic material, and is typically in the range of the pressures used in the copperplate intaglio printing process, i.e. of the order of tons per centimeter of contact line.

A thermoplastic material is an organic polymer which has, above its temperature of use, a temperature range of reversible softening, where the polymer can be easily plastically formed or deformed. Plastic deformation, as opposed to elastic deformation, means that the material retains its new form after the deformation process has taken place. Plastic deformation can be imparted to any material, if pressures or forces are applied which are larger than those required for elastic deformation but smaller than those which would produce mechanical rupture.

In particular, the embossing process of the present invention is performed in a non-thermoplastic, or cold-plastic way, i.e. the substrate is not softened by the application of heat before or during the embossing operation. Non-thermoplastic materials such as paper, which do not soften under the influence of heat, can only be deformed in a cold-plastic way, independent of the temperature used in the operation. Non-thermoplastic or cold-plastic deformation has therefore to be understood as a plastic deformation realized either without the application of heat, or on a material which does not soften under the heat that may be applied in a process. Materials supporting cold-plastic deformation are referred to in the following as cold-embossable. Preferably, the substrate of the invention is a non-thermoplastic material, in particular a metallized paper material, into which the relief of the optically variable diffractive image structure can be impressed in the course of a printing-type embossing operation.

It has surprisingly been found, that metallized fibrous sheet materials, such as metallized paper, can be very successfully embossed with optical diffraction gratings (DOVID reliefs) having graphic features of micron to sub-micron size, despite of their apparent lack of surface smoothness. The required surface smoothness is, to all evidence, produced in the embossing process itself, under the influence of the applied pressure. The possibility of a direct embossing of DOVIDs into a metallized paper surface under conditions which are similar to copperplate-intaglio printing opens the way for an easy and secure production of DOVIDs at the security printer's facility.

Although the embossing of metallized paper with decorative patterns in the millimeter to sub-millimeter range is known in the art, e.g. from WO 00/69622, the embossing according to the present invention is characterized in that the embossed patterns are in the micrometer to submicrometer range, i.e. the impressed relief exclusively contains lines having a largeness and/or dots having a diameter smaller than 10 micrometers. The embossing of micrometer-to-submicrometer sized features according to the present invention noteworthy requires much higher pressure than that which can be applied with the device disclosed in WO 00/69622.

The combination of embossing a DOVID relief with a printing step is achievable in particular, if the metal layer is applied to the substrate prior to the printing process. Given the fact that metallization of a paper substrate is not a "security printing operation", such metallization can be freely sub-contracted by the security printer to an outside partner, or can be even performed by the paper supplier, as long as no security printing has been applied to said substrate. Pre-metallized substrates, such as paper for security documents, can thus be printed and embossed in a single, combined process within the security printer's facility.

According to the present invention, the embossed DOVID relief is subsequently protected from environment influence and tampering by over-coating it with a tiny layer of varnish (typically 3 to 5 microns). Preferably, a clear, glossy UV-curable varnish is applied over the DOVID relief and hardened by UV-curing in a UV-dryer equipment.

The need for applying a protection varnish over the DOVID relief excludes the use of purely dielectric materials, such as disclosed in US 5,873,305; US 5,862,750; WO 89/03760 A1 and US 5,759,683, as a substrate for the direct-embossed DOVID of the present invention, for the following physical reason:

For an optical effect to be observed from the embossed DOVID relief, some incident light must at least be reflected at the surface or interface carrying the relief. The light reflection r at the interface of a first, dielectric, and a second, general, material, having refractive indices $N_1 = n_1$ and $N_2 = n_2 + i*k_2$, respectively, is noteworthy governed by Fresnel's law (I) (for vertical incidence):

$$r = ((n_2 - n_1)^2 + k_2^2) / ((n_2 + n_1)^2 + k_2^2) \quad (I)$$

wherein $n_1$ is the (real) refractive index of the outer, dielectric medium, e.g. of air ($n_1 = 1$) or of an over-coating polymer (e.g. $n_1 = 1.40$), and ($n_2$; $k_2$) is the (complex) refractive index of the embossed substrate, e.g. of polycarbonate ($n_2 = 1.585$; $k_2 = 0$) or of aluminum ($n_2 = 0.76$; $k_2 = 5.32$). Dielectrics are noteworthy characterized by having a real index of refraction (imaginary component $k = 0$), whereas metals have a complex index of refraction (generally having a substantial imaginary component k).

According to formula (I), a polycarbonate dielectric in air, as an example of an embossed thermoplastic material, has a surface reflectivity of merely 5% (i.e. about the reflectivity of a window glass). After over-varnishing it with a coating polymer of $n_1 = 1.40$, the reflectivity of the interface drops to 0.4% and the diffraction effects are now hardly any longer visible. On the other hand, an embossed aluminum layer, over-varnished with the same dielectric polymer of $n_1 = 1.40$ still has a reflectivity of 86% (i.e. the reflectivity of a good mirror). For this reason, the preferred substrate material for the DOVID according to the present invention is a metal-coated substrate, such as a metallized paper.

The DOVID device according to the invention comprises thus a carrier material, such as a paper or a paper-like material (1), coated with a metal layer (2) through a suitable deposition process (sputtering, evaporation in high vacuum, or other coating process), which is embossed with a relief in the form of a diffractive image structure (grating G), whereby said relief (G) extends at least partly through said metal layer (2) into the underlying carrier material (1). The embossed metal layer (2) carrying the relief (G) is further protected by a varnish coating (3).

Said DOVID device is hereby preferably produced as part of a document or article. The carrier material (1) is preferably a material comprising a fibrous component, such as cellulose fibers; most preferred is a paper substrate. However, other fibrous components such as synthetic and natural fibers (e.g. plant fibers) are considered as well, in particular the mechanically resistant silk fibers, used to make some sorts of currency paper.

The metal layer (2) can be of a metal such as gold, silver, nickel, chromium, aluminum, iron, or of one of their alloys. It is preferably deposited by a physical vapor deposition process.

The varnish coating (3) is preferably a UV-curing varnish layer. It may furthermore comprise one or more additional security elements, such as UV-, visible-, or IR-absorbing compounds, UV-, visible-, or IR-luminescents and the like.

The method for producing the DOVID according to the present invention on a carrier material comprising a fibrous component, e.g. on paper, is characterized in that said carrier material is coated at least in part with a metal layer, and that a diffractive image structure, such as a hologram, an optokinematic element, a diffraction pattern or a micro-engraving, is embossed into said metal-coated carrier material such that the embossed relief extends at least partly through said metal layer into said carrier material.

Embossing shims for producing the DOVID relief in said substrate are disclosed e.g. in US 5,521,030 and EP 1,038,206 A1. Said shims, which may be of either flat or cylindrical shape, depending on the machine, are preferably of a hard material such as steel, or, alternatively, carry a hard-coating, such as diamond, diamond-like carbon, titanium nitride or hard-chromium, or a combination of various coating layers on a support of e.g. copper or nickel. Said hard coating has a thickness of preferably less than 300 nm, typically about 100 nm, and can be produced by chemical or physical vapor deposition techniques on almost any kind of substrate as an industrial standard.

The metal-coated substrate used for the embossing is preferably a metallized fibrous printing support such as paper. The metal coating on the substrate is preferably applied by a physical vapor deposition method, e.g. by thermal evaporation in vacuum or by sputtering, such as known in the art. The preferred thickness of the metal layer is less than 300 nm, and typically of the order of 30 - 100 nm. The most preferred metal is aluminum, deposited by thermal evaporation in a high-vacuum. Other metals, such as nickel, chromium, gold, etc., as well as metal alloys, can also be used. The metal can furthermore be applied to the substrate surface by any known coating technique. A substrate having a surface unevenness which is smaller than the resolution of the embossing pattern is preferred.

Depending on the application, the substrate (S) needs not to be metallized on its entire surface; its metallization can noteworthy be restricted to a particular area (A), destined for the later embossing of the DOVID. Such partial metallization can be achieved by an appropriate shielding of the substrate surface in the high-vacuum metal deposition process. The metallization of the substrate can noteworthy be performed in advance to, and independent of, the printing and embossing step, either and preferably by the paper manufacturer or by a subcontractor, or, in certain cases as well by the security printer in a different facility.

The embossing of the metallized substrate by an embossing shim is straightforward, given that sufficient pressure is applied. The embossing is achieved through a non-thermoplastic, i.e a cold-plastic deformation of the substrate's metal layer, which requires considerably more pressure than the generally practiced hot-embossing of thermoplastic materials. For this reason, the embossing shim has preferably a hardened surface, in order to resist to abrasion and increased mechanical stress.

As the embossing of the DOVID requires similar pressure conditions as copperplate-intaglio printing, it can advantageously be combined with, or integrated into, a copperplate-intaglio printing step. Copperplate printing plates are furthermore made in the very same way as DOVID embossing shims, which, in principle, allows:

   i) to emboss DOVIDs on a copperplate-intaglio printing machine, an equipment which is already available at the security printer's facility;
   ii) to combine ordinary copperplate-intaglio printing with the embossing of a DOVID.

The plates or shims are preferably surface-hardened, in order to make them mechanically resistant to wear and wiping.

As the substrate is metallized before the printing operation, the DOVID may be applied and finished during the security printing process without need for taking the unfinished document out of the facility for an additional manufacturing step.

The protection of the DOVID's open embossed relief surface against environmental influence and mechanical replication is preferably achieved by applying, in a subsequent step, a UV-curing varnish over the embossed relief and curing said varnish. The function of the varnish is noteworthy threefold:

i) to consolidate and fix the fragile pattern in the embossed metal layer, in order to avoid it from being lost by mechanical environment influence;
ii) to protect the metal layer from chemical corrosion;
iii) to protect the DOVID from mechanical replication.

Said protection varnish may contain additional security features, such as UV, visible or IR-absorbing materials, luminescent materials, a forensic marking as disclosed in US 6,200,628 B1, and the like. It should solidly bind to the embossed substrate surface, providing for maximal adherence and preventing thereby any tampering of the DOVID; in fact, any attempt to remove a so produced DOVID from its substrate will irremediably destroy it, together with the substrate.

Vacuum-metallized paper is furthermore a substrate for the electro-erosion printing process, which allows to apply variable information at high speed, such as described in US 4,063,255; US 4,157,554 and related disclosures. The DOVID of the present invention can, if needed, be advantageously combined with said electro-erosion printing process; i.e. variable indicia, such as a serial number, a bar code or the like, may be applied to the metallized paper before or after the embossing step; and said indicia being sealed in a tamper-proof way, together with the DOVID, through the final varnishing step.

Materials carrying a thin metal layer (in the 5 to 50 nm range) can also be marked by suitable laser radiation, e.g. from a Nd-YAG laser as described in EP1,145,866 A1, or a UV excimer laser, through a local evaporation and/or chemical transformation of the metal layer. The DOVID of the present invention can also be advantageously combined with such laser marking. Said laser marking may hereby be applied at every moment throughout the method, either before the embossing step, or before the varnishing step, or even through the varnish on the finished DOVID. The latter option is noteworthy of interest, because it allows to carry out the marking at a separate place than the manufacturing of the DOVID. Laser marking of a metal layer through a dielectric overcoating is furthermore easier achieved than a direct laser marking of the naked metal, because the dielectric layer enhances the energy absorption of the metal by diminishing the reflectivity of the interface.

The DOVID of the present invention may thus carry, in addition to said diffractive image structure, indicia which are represented by a modification of the physical properties of the metal layer.

Variable information may, of course, also be applied to the DOVID prior to varnishing by any other suitable printing process, such as ink-jet printing or laser marking.

The invention is now further explained with the help of the drawings and exemplary embodiments.

In the drawings:

Fig. 1     schematically shows the DOVID device of the invention.

Fig. 2     shows the principle of the combined Intaglio / DOVID printing.

Fig. 3     shows an embossed coarse-line pattern on aluminum paper according to the first example, prior to varnishing.

Fig. 4     shows an embossed fine-line pattern on aluminum paper according to the first example, prior to varnishing.

Fig. 5     shows an embossed coarse-line pattern on gold-coated glossy paper according to the second example, prior to varnishing.

Fig. 6     shows an embossed fine-line pattern on gold-coated glossy paper according to the second example, prior to varnishing.

Fig. 7     shows an embossed coarse-line pattern on gold-coated fibrous paper according to the third example, prior to varnishing.

Fig. 8     shows an embossed fine-line pattern on gold-coated fibrous paper according to the third example, prior to varnishing.

<u>Examples</u>

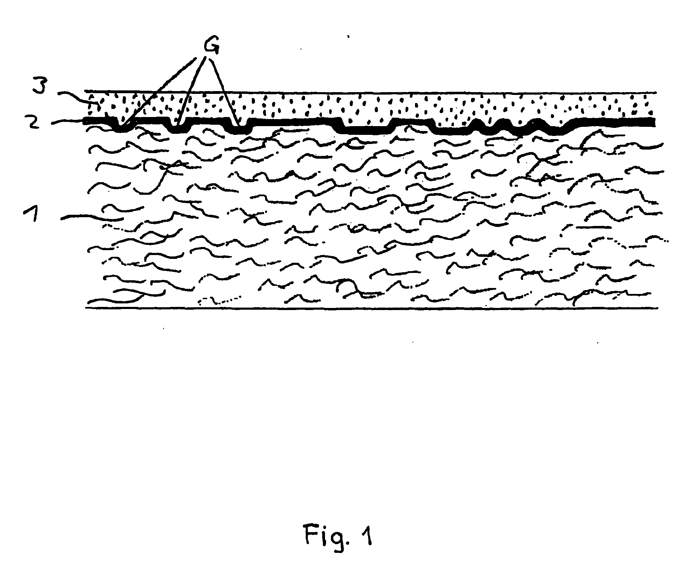

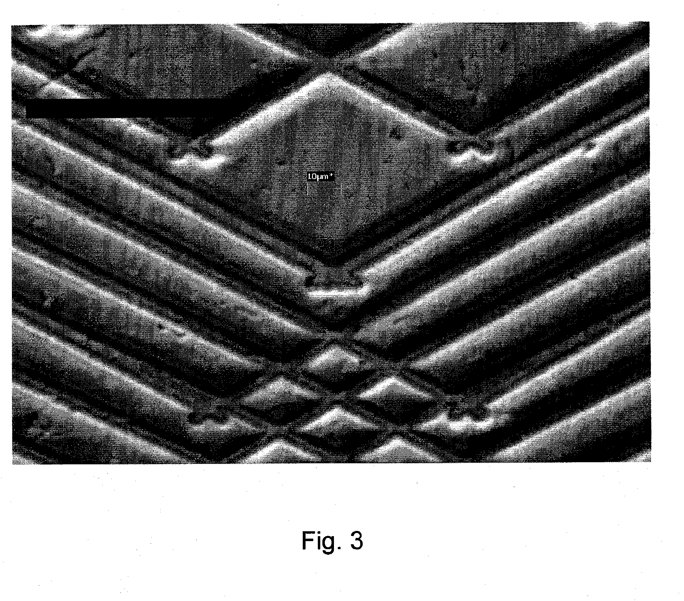

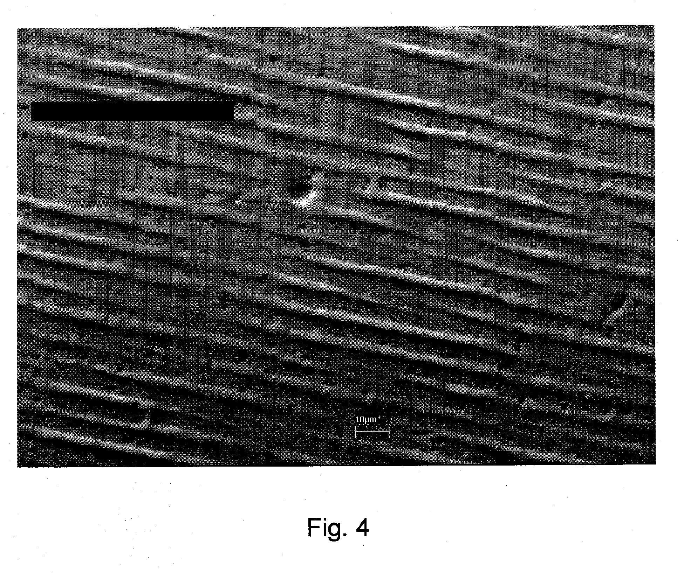

In a first embodiment of the invention, according to Fig. 1, an 5 micrometer-aluminum-coated paper was embossed on a copperplate-intaglio press, using a "Optokinematic"-type embossing shim, derived from a master plate by the standard replication method known in the art (assembling vinyl-replica, followed by a nickel electroforming process). Fig. 3 and Fig. 4 show electron-microscopic pictures of the resulting embossed surface, prior to varnishing, for coarse and fine embossing patterns, respectively. It clearly appears that cold-plastic deformation of the chosen substrate under appropriate pressure is a reliable means for transferring tiny engraved patterns with high fidelity into the metal-coated surface.

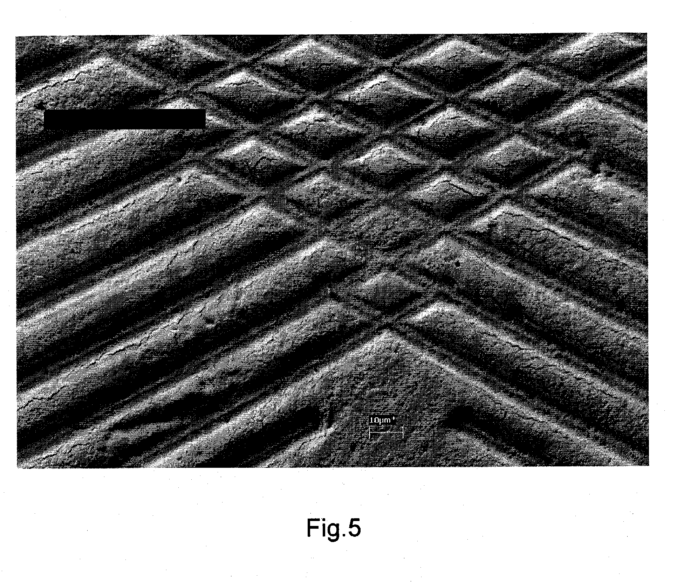

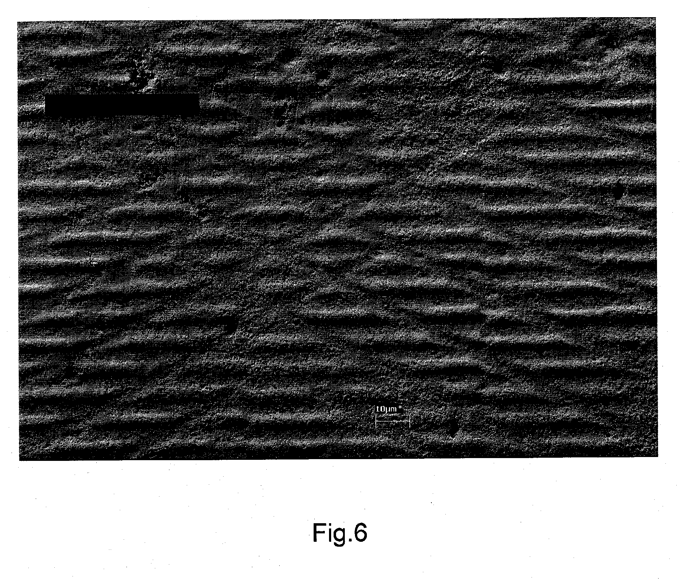

In a second embodiment of the invention, according to Fig. 1, ordinary glossy paper (1) was metallized by sputtering it with a 30 nm thick layer of gold (2). The metallized sheet was subsequently embossed on a copperplate-intaglio press, using the same "Optokinematic"-type embossing shim as in the first embodiment. Fig. 5 and Fig. 6 show electron-microscopic pictures of the resulting embossed surface, prior to varnishing, for coarse and fine embossing patterns, respectively. Although the substrate surface in this embodiment is not as flat and optically perfect as that of the first embodiment, the engraved pattern is still transferred with high fidelity into the chosen substrate surface.

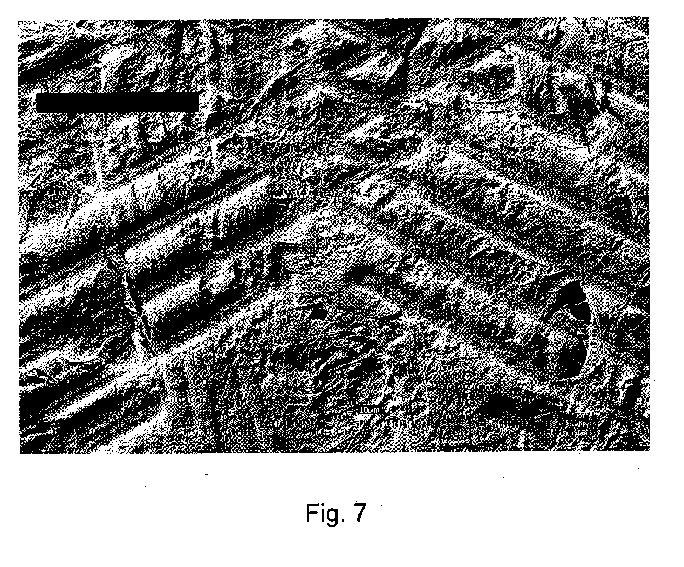

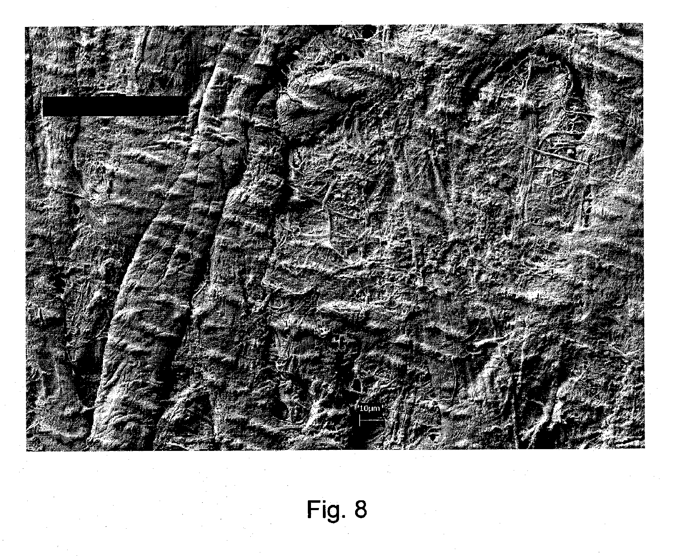

In a third embodiment of the invention, according to Fig. 1, fibrous fiduciary paper (1) was metallized by sputtering it with a 30 nm thick layer of gold (2). The metallized sheet was subsequently embossed on a copperplate-intaglio press, using the same "Optokinematic"-type embossing shim as in the first embodiment. Fig. 7 and Fig. 8 show electron-microscopic pictures of the resulting embossed surface, prior to varnishing, for coarse and fine embossing patterns, respectively. The substrate surface in this embodiment clearly represents a worst case situation: paper fibers, of 20 micrometer diameter and having still larger voids in between them, are running along and across the engraved pattern, which is much finer than the underlying substrate texture. However, a sufficient amount of the engraved pattern is still transferred to the chosen substrate surface, and the Optically Variable Graphics Element-effect is readily and entirely observed on the so embossed DOVID.

In order to fix and protect the resulting embossed DOVIDs, they were over-coated with a 5 micrometer thick layer of a glossy UV-varnish, and the varnish was hardened using a UV-dryer. A flexible and glossy-surface paper, carrying the inherent, protected optically variable device, was obtained.

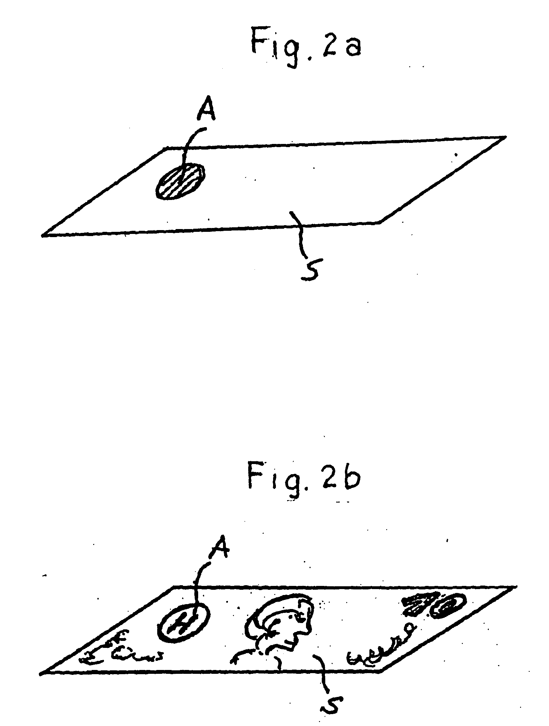

Fig. 2 illustrates the principle of the combined Intaglio / DOVID printing: a substrate (S, Fig. 2a), comprising a metallized area (A), is furnished to the security printer. In a single pass on an intaglio printing machine, a multi-color Intaglio 'recto', including portrait, denomination and a hologram (H) on the metallized patch (A) is produced (Fig. 2b).

**Claims**

1.  Article comprising a substrate having a carrier material containing a fibrous component, said carrier material having a viewing surface and an impressed relief in said viewing surface in the form of a diffractive image structure, such as a hologram, an optokinematic element, a diffraction pattern or a micro-engraving;
    **characterized in that**

    - a metal layer is present on said viewing surface under at least part of said impressed relief, and
    - that said impressed relief extends at least partially through the metal layer into said carrier material.

2.  Article according to claim 1, **characterized in that** a protective coating is present on said impressed relief.

3.  Article according to claim 1 or 2, **characterized in that** said fibrous component is cellulose.

4.  Article according to one of the preceding claims, **characterized in that** said carrier material is paper.

5.  Article according to one of the preceding claims, **characterized in that** said impressed relief exclusively contains lines having a width and/or dots having a diameter smaller than 10 micrometers.

6.  Article according to one of the preceding claims, **characterized in that** the impressed relief is the product of a cold-embossing process.

7.  Article according to one of the preceding claims, **characterized in that** said carrier material is a non-thermoplastic material.

8.  Article according to one or more of the preceding claims, wherein the metal layer comprises a metal selected from the group including gold, silver, nickel, chromium, aluminium, iron and their alloys.

9.  Article according to one or more of the preceding claims wherein the metal layer is the product of a physical vapor deposition process.

10. Article according to one or more of the preceding claims 2 to 9, **characterized in that** said protective coating is a UV curing varnish layer.

11. Article according to one or more of the preceding claims 2 to 10, **characterized in that** said protective coating contains one or more additional security elements selected from the group of UV-, visible-, and IR-absorbing compounds and UV-, visible-,and IR-luminescent compounds.

12. Article according to one or more of the preceding claims **characterized in that** said metal layer contains, in addition to said impressed relief, indicia represented by a modification of the physical properties of the metal layer.

13. Security document comprising an inherently formed diffractive image structure in the form of an impressed relief in a viewing surface of said security document, **characterized in that** a metal layer is present on said viewing surface under at least part of said impressed relief and that said impressed relief extends at least partly through said metal layer into the underlying carrier material.

**14.** Security document according to claim 13 incorporating an article in accordance with one of the claims 2 to 12.

**15.** Security document according to claim 13 or 14, **characterized in that** the impressed relief is the product of a combined printing/embossing process.

**16.** Method for applying a diffractive image structure to the surface of a substrate comprising a fibrous component through an embossing process, **characterized in that** said surface of said substrate is coated at least in part with a metal layer prior to the embossing process.

**17.** Method according to claim 16, for producing an article comprising a substrate having a carrier material containing a fibrous component, said carrier material having a viewing surface and an impressed relief in said viewing surface in the form of a diffractive image structure, such as a hologram, an optokinematic element, a diffraction pattern or a micro-engraving, the method being **characterized in that** said carrier material is coated at least in part with a metal layer, and that said relief is embossed into said metal-coated carrier material such that it extends at least partly through said metal layer into said carrier material.

**18.** Method according to claim 16 or 17, **characterized in that** a protective varnish coating is further applied on top of said impressed relief.

**19.** Method according to one or more of claims 16 to 18, **characterized in that** said fibrous component is of cellulose.

**20.** Method according to one or more of claims 16 to 19, **characterized in that** said carrier material is a paper.

**21.** Method according to one or more of claims 16 to 20, **characterized in that** said metal layer is applied to said carrier material by a physical vapor deposition process.

**22.** Method according to one or more of claim 18 to 21, wherein said varnish coating is produced by applying a UV-curing varnish and curing it.

**23.** Method according to one or more of claims 16 to 22, **characterized in that** said relief having the form of a diffractive image structure is embossed on a printing press.

**24.** Method according to one or more of claims 16 to 22, **characterized in that** said relief having the form of a diffractive image structure is embossed as part of an Intaglio printing process.

**25.** Use of a paper having a metal-coated surface area to form a diffractive image structure in said area by embossing a relief on a printing press.

Fig. 1

Fig. 2a

Fig. 2b

Fig. 3

Fig. 4

Fig.5

Fig.6

Fig. 7

Fig. 8

**European Patent Office**

## EUROPEAN SEARCH REPORT

Application Number

EP 02 02 7481

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 093 932 A (POLESTAR JOWETTS LTD) 25 April 2001 (2001-04-25)<br><br>* paragraphs [0001],[0002],[0013],[0015],[0024],[0027], [0035],[0036]; figures 3,4 *<br>--- | 1-5,7, 9-15, 17-23,25 | G03H1/02 G07D7/12 B42D15/10 |
| X | US 4 856 857 A (TAKEUCHI SATOSHI ET AL) 15 August 1989 (1989-08-15)<br><br>* column 6, line 53-64 *<br>* column 9, line 57 *<br>* column 19, line 11-17; figure 11 *<br>--- | 1-5, 7-10,13, 14, 16-23,25 | |
| X | EP 0 297 764 A (METAL CLOSURES GROUP PLC) 4 January 1989 (1989-01-04)<br><br>* the whole document *<br>--- | 1-10,13, 14, 16-21,23 | |
| A | US 5 889 598 A (MONAGHAN BRIAN J) 30 March 1999 (1999-03-30) * column 6, line 1-27; figure 4 *<br>----- | 1,13,16, 25 | TECHNICAL FIELDS SEARCHED (Int.Cl.7)<br><br>G03H G07D B42D |

The present search report has been drawn up for all claims

| Place of search | Date of completion of the search | Examiner |
|---|---|---|
| MUNICH | 4 February 2003 | Noirard, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 7481

04-02-2003

| Patent document cited in search report | | Publication date | Patent family member(s) | | Publication date |
|---|---|---|---|---|---|
| EP 1093932 | A | 25-04-2001 | EP | 1093932 A1 | 25-04-2001 |
| US 4856857 | A | 15-08-1989 | JP | 7062784 B | 05-07-1995 |
| | | | JP | 61254975 A | 12-11-1986 |
| | | | JP | 2007213 C | 11-01-1996 |
| | | | JP | 6079193 B | 05-10-1994 |
| | | | JP | 61272772 A | 03-12-1986 |
| | | | JP | 1988406 C | 08-11-1995 |
| | | | JP | 6046340 B | 15-06-1994 |
| | | | JP | 62131284 A | 13-06-1987 |
| | | | DE | 3650027 D1 | 22-09-1994 |
| | | | DE | 3650027 T2 | 26-01-1995 |
| | | | EP | 0201323 A2 | 12-11-1986 |
| | | | EP | 0609683 A1 | 10-08-1994 |
| EP 0297764 | A | 04-01-1989 | DK | 355388 A | 30-12-1988 |
| | | | EP | 0297764 A1 | 04-01-1989 |
| | | | JP | 1023274 A | 25-01-1989 |
| | | | NO | 882822 A | 30-12-1988 |
| | | | ZA | 8804611 A | 29-03-1989 |
| US 5889598 | A | 30-03-1999 | US | 5706106 A | 06-01-1998 |